# EUROPEAN PATENT APPLICATION

(11) **EP 1 524 778 A1**
(43) Date of publication of application: **20.04.2005**
(21) Application number: 03023515.4
(22) Date of filing: 15.10.2003
(51) Int. Cl.: H04B 1/66, H04M 3/493, H04L 29/08

(54) **Method for communicating information from a server to a user via a mobile communication device running a dialog script**

(71) Applicant: Harman Becker Automotive Systems GmbH, 76307 Karlsbad (DE)
(72) Inventor: Hennecke, Marcus, Ulm 89075 (DE)
(74) Representative: Grünecker, Kinkeldey, Stockmair & Schwanhäusser Anwaltssozietät

(57) **Abstract**

The invention is directed to a method for receiving information via a mobile communication device comprising the steps of receiving a dialog script by the mobile communication device for performing a dialog between the mobile communication device and a user, running the dialog script on the mobile communication device to perform a dialog between the mobile communication device and the user. The invention is further directed to a method for providing information by a server comprising providing a dialog script by a server for a mobile communication device, for performing a dialog between the mobile communication device and a user.

## Description

The invention is directed to a method for communicating information from a server via a mobile communication device, in particular, to a method for receiving information by a mobile communication device and a method for providing information by a server.

Mobile communication devices such as mobile phones, personal digital assistants (PDA) with GSM capabilities or automotive head units with a GSM module can be used for acquiring information in different ways. As a typical example, a travel agency can be called and a corresponding travel agent asked for flight information. Another example is calling the directory assistance.

More and more often, part of or all the requested information services are provided by automated systems. In such a case, a customer calls a person and is - at a certain stage of the dialog - connected to a computer which provides the information. In some cases, the user even directly calls a server or a computer which itself is configured to enter a kind of dialog with the customer. During such a dialog, the customer is prompted to enter his questions or to tell the system what information is to be provided.

The communication of the customer or user with an automated information service can be performed in different ways. Usually, at the beginning, the information service outputs a predetermined prompt that was stored in the system asking the user what information he is requesting. The user's input can be made in different ways. For example, one or several keys of the mobile communication device are pressed. A key or a combination of keys is, thus, used to identify the kind of required information.

Alternatively, a user's input can be effected acoustically. In such a case, an utterance of the user transmitted to and received by the information server on which speech recognition is performed. After processing the user's recognized input, the requested information is presented to the user.

In all the prior art systems, the processing of the user's input and the resulting output is performed on the server in accordance with a corresponding dialog script running on the server. This has the drawback that each time a user makes an input or an output comes from the server, the corresponding data is to be transmitted from the server to the mobile communication device. Since a large amount of customers may use the same server at the same time, this increases the load of this server resulting in a delay. Furthermore, if speech recognition is performed on the server, a signal has to be transmitted with large bandwidth and the quality of the signal is still considerably reduced when it arrives at the server. This renders the speech recognition more difficult which is a further disadvantage.

In view of the foregoing, it is the object underlying the invention to overcome these drawbacks and to provide a method for receiving information via a mobile communication device and a method for providing information by a server reducing the server load and requiring less data transmission bandwidth.

This problem is solved by a method for receiving information according to claim 1 and a method for providing information according to claim 16.

Accordingly, a method for receiving information via a mobile communication device is provided, comprising the steps of:
a) receiving a dialog script from a server by the mobile communication device for performing a dialog between the mobile device and the user,
b) running the dialog script on the mobile communication device to perform a dialog between the mobile communication device and a user.

Any kind of information, particularly digital information data, can be provided in this way such as phone numbers, travel information such as flight connections or electronic maps to give only some examples.

Mobile communication devices are portable devices that allow for a wireless transmission of signals. Typical mobile communication devices are mobile phones, PDA's, MDA's (mobile digital assistant), smartphones, or automotive head units. The mobile communication device can comprise a means for establishing a wireless data connection to a server via a telephone or another network, particularly, a digital network; an example for such a means would be a GSM (Global System for Mobile Communications) module.

A dialog script comprises instructions for the device for causing the mobile communication device to perform a dialog between the device and a user. In particular, the dialog script comprises instructions for the mobile communication device on how to prompt a user and how to react on a user's input.

A server is a computer for providing resources, in particular, information data.

Therefore, since the dialog script is run on the mobile communication device, a required dialog for receiving information is simplified and improved. Compared to the prior art, only at the beginning, a data connection between the mobile communication device and the server is required for transmitting the dialog script from the server to the mobile communication device. After that, during the dialog, a connection is in principal only necessary under special circumstances as will be described later. Thus, the time a connection between a server and the mobile communication device has to be held up is reduced. Furthermore, since the dialog script is run on the mobile communication device, the load of the server is relieved.

Furthermore, if, for example, a speech input is enabled, the speech signal can be processed directly on the mobile communication device with a higher bandwidth and distortions of the signal due to the transmission to the server (for example, via a GSM channel) can be avoided.

Preferably, step a) can comprise storing the dialog script in a memory of the mobile communication device. Thus, the dialog script is not only loaded into an internal memory of the mobile communication device. Storing the dialog script in a memory has the advantage that a same dialog script can be used several times when communication with the same server.

According to preferred embodiment, step b) can comprise acoustically and/or optically prompting the user. Therefore, the different capabilities of a mobile communication device can be exploited. In particular, presenting a prompt on a display simplifies the user's life, especially if the prompt has a more complicated form, since the user need not immediately memorize every detail.

Preferably, the above methods can further comprise initiating a dialog between a user and a server. In this way, during the dialog between the mobile communication device and the user, a dialog between the user and a server is also performed upon initiation of the mobile communication device or the dialog script running on the mobile communication device. Thus, the dialog is in fact distributed between the user on the one side and the mobile communication device and the server on the other side. This is particularly useful if at one stage during the dialog between the mobile communication device and the user, the capabilities of the mobile communication device are not sufficient. Then, the server can take over for this part of the dialog.

In some cases, it might also happen that the mobile communication device needs additional data to continue the dialog. For example, if the user is requesting time-table information, the memory of the mobile communication device can be too small to store all possible destinations or the required time for transmitting all the destinations to the mobile communication device. In such a case, a dialog between the user and the server can be useful such that, for example, a speech input from the user is processed by the server which , then, transmits the resulting data (e.g. a specific destination) to the mobile communication device for continuation of the dialog between the mobile communication device and the user. In this way, one has both a dialog between the user and the mobile communication device and - via the mobile communication device - a dialog between the user and the server.

According to a preferred embodiment, step b) can comprise acoustically and/or optically presenting information to the user. This allows for an extended exploitation of the capabilities of the mobile communication device. Optically presenting information is particularly useful when the presented information is rather complex.

Advantageously, the presented information can represent different alternatives among which a user can select from. For example, different flight connections between a specific departure and a destination city can be presented.

According to a preferred embodiment, optically presenting can comprise presenting information on a touch screen, in particular, wherein a part of the presented information is selectable via the touch screen. A touch screen is a display device that also serves as input panel. An input can be made using a finger or a corresponding pen, for example. This results in a highly simplified dialog for the user which can react on an output by directly manipulating or selecting a part of this output.

Preferably, the above methods can further comprise providing a user input, particularly identifying a selected alternative, for a server. Thus, such a user input (e.g., when a user has chosen one out of several alternatives presented to him) can be further processed by the server, for example, resulting in an action initiated by the server.

According to a preferred embodiment, step b) can comprise acquiring an acoustic and/or haptic and/or graphical input. This allows a user to make an input in the respective most suitable way.

A haptic input comprises both an input via keys or via selecting on a touch screen. For example, information representing different alternatives to be selected by the user can be displayed on a touch screen such that the user can select an alternative directly via the touch screen. A graphical input is a touch screen input wherein the user provides the input in a graphical way, for example, by writing the input on the touch screen by hand using a corresponding pen.

Preferably, acquiring an acoustic input can comprise processing the acoustic input using speaker independent and/or speaker dependent speech recognition. As the dialog script and, thus, the processing of the acoustic input is run on the mobile communication device, speaker dependent speech recognition is particularly useful since a corresponding speech recognition means of the mobile communication device can be trained once and is then adapted to the user. In any case, using the speech recognition of the mobile communication device improves the quality of the recognition since the speech signal is processed directly without any transmission to a server.

Preferably, step a) can comprise receiving a dialog specific speech recognition vocabulary set from a server. This improves the speech recognition for a specific dialog script, particularly if more complex and less common words are to be recognized.

According to a preferred embodiment, acquiring a graphical input can comprise processing the input using character recognition. This further simplifies the dialog for the user. When using character recognition or handwriting recognition, a user can enter an input by writing it onto the screen.

According to a preferred embodiment, step a) can be preceded by requesting a dialog script from a server. Thus, a dialog script is received by the mobile communication device upon request and the server knows whether to provide a dialog script or not. In particular, if a mobile communication device is used that is not configured to perform the method for receiving information according to the invention, a server need not provide a dialog script.

Preferably, requesting a dialog script can comprise requesting a dialog script for a predetermined language. This enables an adaptation of the dialog to a preferred language and results in a multilingual environment.

Advantageously, step b) can comprise translating an output to the user to a predetermined language. This is particularly useful if the dialog script is only available for a language the user is not familiar with. In such a case, part or all of the output can be translated on the mobile communication device. Hence, even for-eign-language people can use the information service and the corresponding dialog script.

The invention further provides a method for providing information by a server comprising providing a dialog script for a mobile communication device by a server for performing a dialog between the mobile communication device and a user.

With this method on the side of the server, a dialog between the mobile communication device and the user is enabled due to the dialog script which simplifies and optimizes the way a user acquires information from the server.

According to a preferred embodiment, the method can further comprise performing a dialog between a user and the server initiated by the mobile communication device. This results in a distribution of the dialog between a user and the mobile communication device or the server.

In such a case, advantageously, the method can further comprise performing speech recognition on the server. Thus, if acoustic input is enabled for the dialog, for example, in more complex cases, the speech recognition can be taken over by the server.

According to a preferred embodiment, the method can further comprise receiving electronic data by the server from the mobile communication device, identifying a selected alternative. This allows for a further processing of a user's input depending on what alternative out of a number of alternatives presented to the user was selected.

Preferably, the method can further comprise initiating an action by the server corresponding to the selected alternative. By an action something outside the dialog is controlled or effected; for example, booking a flight is an action. In this way, the dialog script provided for a dialog between the mobile communication device and a user can result in an action as desired by the user.

According to a preferred embodiment, the dialog script can be provided upon request of the mobile communication device. In this way, it can be circumvented that the server tries to provide the mobile communication device with a dialog script although the mobile communication device is not able to run it.

Preferably, providing a dialog script can comprise selecting a dialog script for a preferred language of the mobile communication device. A preferred language, for example, is the language to which the mobile communication device was set by a user. Thus, information can be obtained in a multilingual way.

Advantageously, providing a dialog script can comprise determine by the server a preferred language of the mobile communication device. This can be achieved via the language settings of the mobile communication device, for example. In this case, the mobile communication device need not provide the server with any language information.

According to a preferred embodiment, the previously described methods can further comprise translating information and/or a part of the dialog script by the server into another language.

This is particularly useful if some information or a part of the dialog script is not yet present in another language, for example, that is desired by the user.

The invention further provides a method for communicating information from a server via a mobile communication device comprising the steps of:
establishing a data connection between the mobile communication device and the server
providing information according to the above-described method for providing information by a server and
receiving information according to the above-described method for receiving information via a mobile communication device.

Preferably, the step of providing information can be performed automatically upon establishment of the data connection. In particular, the dialog script can be provided automatically. In this way, a simplified and automated method for communicating information is provided.

Furthermore, the invention also provides a computer program product comprising one or more computer-readable media having computer executable instructions for performing the steps of the above methods.

Further features and advantages of the invention will be described in the following with reference to the examples and the figures.
- Fig. 1: is a flow diagram illustrating a method for communicating information from a server via a mobile communication device;
- Fig. 2: is a flow diagram illustrating a method for providing information by a server;
- Fig. 3: is a flow diagram illustrating a method for receiving information via a mobile communication device;
- Fig. 4: is a flow diagram illustrating the running of a dialog script; and
- Fig. 5: illustrates a graphical output of on the mobile communication device.

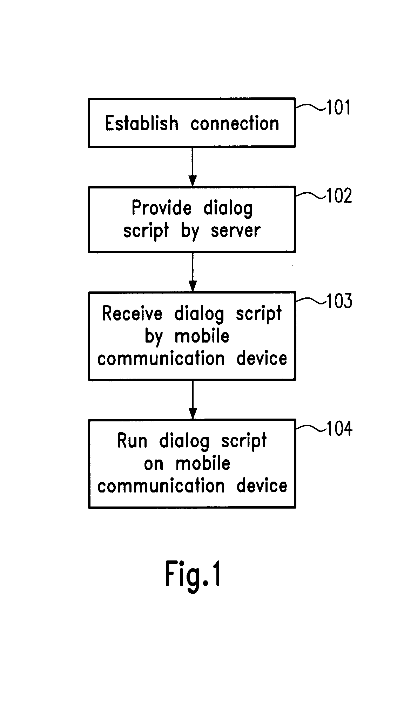

In Fig. 1, the course of action for an example of a method for communicating information from a server to a user via a mobile communication device is illustrated.

In a first step 101, a connection between a mobile communication device such as a mobile phone, a PDA or an automotive head unit (e.g., for car radio, navigation system, and mobile phone) comprising a means for mobile communication such as a GSM module and a server is established via a corresponding network. This can be achieved, for example, by manually dialing a corresponding phone number or can be initiated automatically upon occurrence of a specific event.

The server can be any device for providing information such as a corresponding computer of a travel agency, a directory assistance or a service for booking a hotel. Because of the mobile communication device, the connection is established in a wireless way, for example, via a common digital mobile phone network, or another network.

After the connection is established, in step 102, a dialog script is provided by the server for the mobile communication device. This dialog script is intended to enable the mobile communication network to enter a dialog with the user. Thus, the dialog script has to comprise instructions that are executable by the mobile communication device. The dialog script can be based, for example, on the XML or voice XML standard.

The dialog script can be loaded either into the internal memory of the mobile communication device or stored into a non-volatile memory of the mobile communication device. In the latter case, the dialog script can be used again each time the mobile communication device communicates with the same server and/or regarding the same subject (requesting telephone number, booking hotel room, requesting flight connection, etc.). This step 103 of receiving the dialog script by the mobile communication device, thus, can also include the storing of the dialog script in a memory.

In the last step 104, the dialog script is actually run on the mobile communication device. In this way, the mobile communication device can enter a dialog with a user of the mobile communication device. This means the mobile communication device can prompt the user and then process a subsequent input in order to provide a reaction.

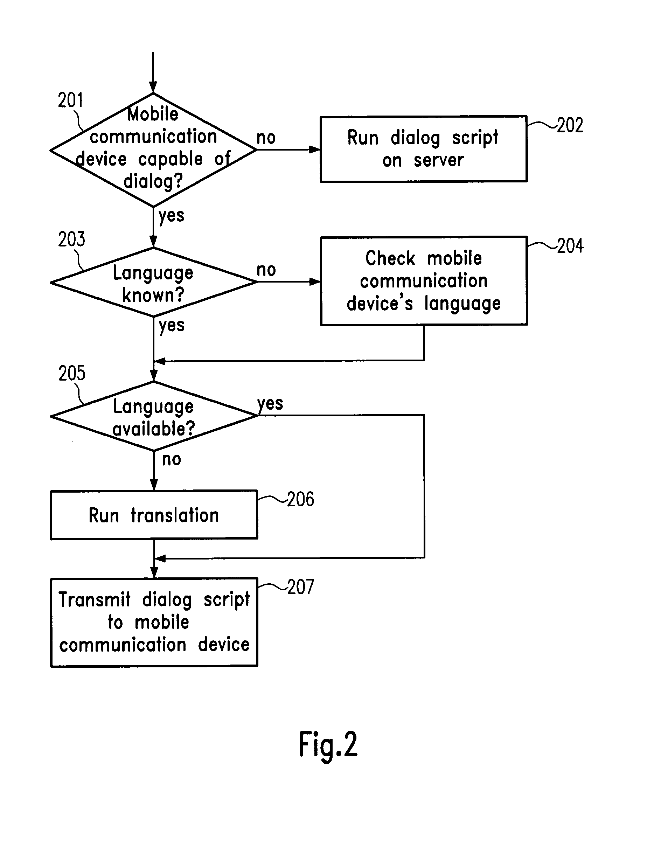

In the following, a method of providing the dialog script by a server will be explained with reference to Fig. 2. In the illustrated example, after a connection between the mobile communication device and the server is established, it is checked in a first step 201 whether the mobile communication device is actually capable of running a dialog script.

There are different possibilities to check this. For example, the mobile communication device can transmit to the server a signal at the very beginning of the connection (i.e. upon establishment of the connection) indicating that it would accept or is requesting a dialog script. This can be done with or without specifying the dialog script or some of its parameters (e.g., language) in more detail. Alternatively, upon establishment of the connection, the server can also send a signal to the mobile communication device, for example, for checking whether the mobile communication device is of a type that - according to the server's knowledge - is able to run a dialog script. In this case, the server takes the initiative in contrast to the first example. According to a further alternative, the server can also send a signal to the mobile communication device prompting the user to indicate whether a dialog script is to be loaded onto the mobile communication device.

If the result of this checking is negative, the method proceeds to step 202. In other words, if the mobile communication device is not able or does not want to receive a dialog script, a corresponding dialog script has to be run on the server instead. This means that a dialog only between the server and the user is performed via the mobile communication device.

If, however, a transmittal of a dialog script to the mobile communication device is possible, it is checked in the next step 203, whether a preferred or desired language is already known to the server. This step, of course, is only useful if the server can select between dialog scripts for different languages or if a translation possibility is present. Similar to the previous step 201, the server can obtain the corresponding language information in different ways. For example, when establishing the connection with the server, the mobile communication device can provide the server with the information regarding a preferred language.

If the server has no language information, it proceeds to step 204 in which the language of the mobile communication is checked. This can be achieved, for example, by sending a signal to the mobile communication device asking for any language settings. Thus, the server can retrieve language settings of the mobile communication device or a speech recognition unit which is possibly present in the mobile communication device.

It is also possible that the mobile communication device has more than one preferred language, for example, if a multilingual speech recognition or several speech recognition means are present. In this case, the information regarding one or several of these preferred languages can be provided for the server.

In the following step 205, it has to be determined whether a preferred or desired language is actually available to the server, in other words, whether a dialog script for the corresponding language (or one of the preferred languages if more than one is present) is already stored in a memory of the server.

If this is not the case, the method continues with step 206. In this step, a translation is run to translate some or all parts of the dialog script that are later possibly presented (output) to the user. Of course, this step is only possible if a corresponding translation capability is present on the server.

In the last step 207, the dialog script is transmitted to the mobile communication device where it is loaded and run.

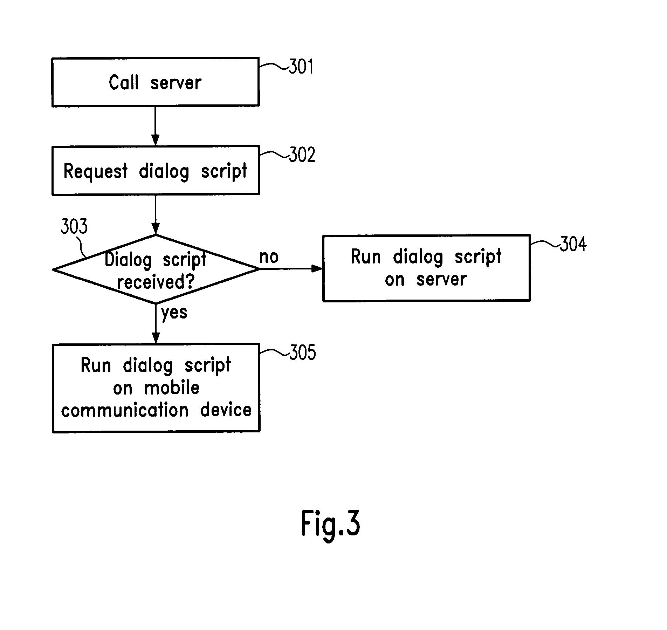

Fig. 3 illustrates an example of the course of action on the side of the mobile communication device. In the first step 301, the mobile communication device calls the server to establish a connection. As already stated above, this can be done via a digital telephone network or any other suitable network.

After a connection is established, the mobile communication device requests a dialog script in step 302. This request can be rather unspecific. For example, the mobile communication device can send a signal only identifying the type of the mobile communication device to allow the server to determine whether the mobile communication device is indeed capable of running a dialog script. However, the mobile communication device, preferably, provides the server with some additional information such as the desired language or what topic the dialog script should deal with, which is particularly useful if the server provides several different services.

In the following step 303, it is checked whether the mobile communication device received a dialog script. If this is not the case, for example, because the server does not offer a desired service or does not provide a dialog script at all, or because a dialog script corresponding to the request (e.g., regarding the language) of the mobile communication device is not available, running a dialog script on the server is initiated (e.g., by the mobile communication device) in step 304. In this case, a dialog between a user and the server via the mobile communication device is started, however, there is no dialog between the user and the mobile communication device itself.

On the other hand, if a dialog script was received by the mobile communication device, it is run on the mobile communication device so as to enter a dialog between the user and the mobile communication device in step 305.

In the examples of this figure and the previous figures, it was assumed that at least on the server, a dialog script can be run. However, this need not be the case. For example, it can also be possible that a human agent be contacted via the server. This agent, then, enters into a dialog with the user and can provide the user with the desired information in an electronic way, for example, by sending the information to the mobile communication device via the server.

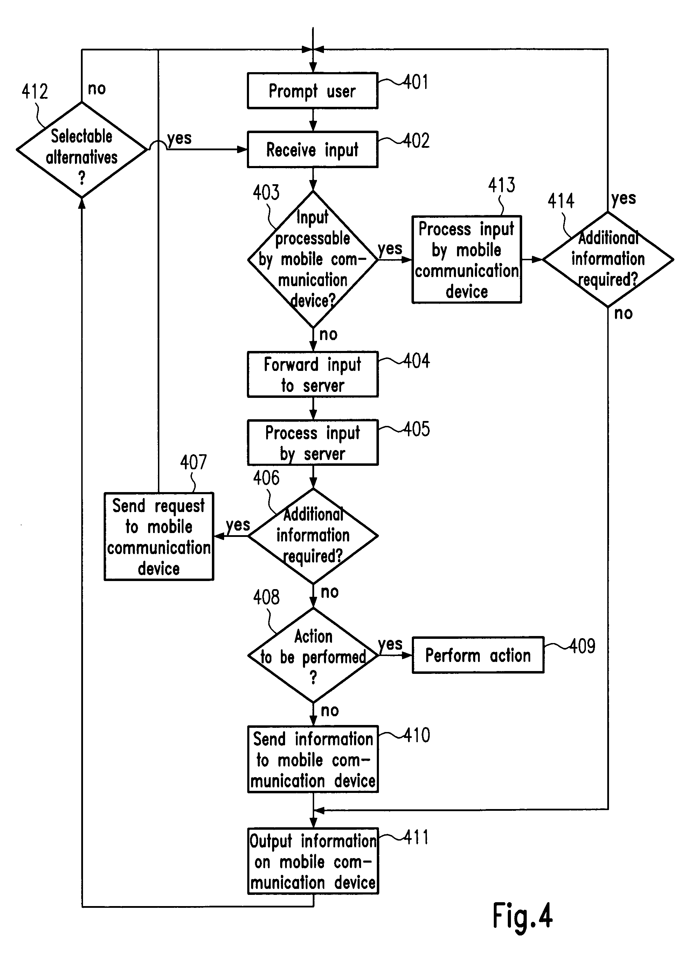

An example for a sequence of steps occurring during a dialog in accordance with a dialog script of the present invention is illustrated in Fig. 4.

During a corresponding dialog, a user is prompted one or several times (step 401). For example, after establishment of a data connection between the mobile communication device and a server of a travel agency or an airline, a typical dialog can start with: "Welcome to our automated flight information service. Please state the name of the departure city".

Such a prompt can be output in different ways. In particular, an acoustical output can be effected either by playing a previously stored speech signal or by synthesizing a corresponding speech signal. Furthermore, in addition or alternatively, an optical output on a display of the mobile communication device can be present. The acoustical and the optical output can but need not be identical. For example, in the case of the above-mentioned flight information, the term "Departure city?" can appear on the display at the beginning of the dialog.

In the next step 402, an input of a user is received. Again, this input can happen in different ways. First of all, a user can input the required information acoustically, for example, by speaking the word "Munich".

Furthermore, a haptic input can be used. For example, a user can enter the input via one or several keys that are part of the mobile communication device. If the mobile communication device comprises a touch screen, the user can also enter the input via this touch screen, for example, by selecting the city name out of a presented list of possible inputs. In the case of a touch screen, a graphical input is also possible which means that the input is written by hand onto the screen using a suitable pen, for example.

In the following step 403, it is checked whether the input can actually be processed by the mobile communication device. There are different possibilities of processing an input. First of all, in some cases, the input must be processed to be recognized at all. In the case of an acoustic input, for example, speech recognition has to be performed. For this, standard methods of speech recognition can be used. As an example, a speaker dependent speech recognition can be present on the mobile communication device. This speech recognition is adapted to the user. Alternatively and/or additionally, a speaker independent speech recognition can be performed on the server or on the mobile communication device. If an input is effected graphically via a touch screen, character or handwriting recognition has to be performed to recognize this input.

However, it might happen that the mobile communication device is unable to perform any speech recognition at all or to recognize a specific input utterance because no corresponding vocabulary is stored in the mobile communication device. For example, if a city name is to be recognized, the corresponding list of possible city names might be too large to be stored in or to be transmitted to the mobile communication device and is, thus, only present on the server. This may similarly apply to the case of a haptic or graphical input via a touch screen.

Then, in step 405, the input is processed by the server, for example, using an appropriate speech or character recognition. Such a forwarding of the input to the server is particularly useful if processing the input requires a large amount of data.

After having processed the input, it is checked in step 406 whether additional information (additional input) is required for continuation. If this is the case, the next step would be step 407 according to which a corresponding signal or request is sent to the mobile communication device. This results in another prompt (step 401) regarding this additional information.

In the above example, such a prompt could be "Please state the name of the destination city" (acoustical output) and "Destination city" (optical output on display). Now, the user enters a corresponding input, "Madrid", for example, and the dialog continues as described above.

If not further information is required, it is checked in step 408 whether the input requires an action to be performed. An action can be the booking of a flight or of a hotel room. If yes, the corresponding action is performed, step 409.

In the example corresponding to the illustrated dialog, an alternative to performing an action is providing information. Thus, if no action is to be performed, the required information is sent to a mobile communication device (step 410). The mobile communication device outputs the information (step 411). (It is to be understood, however, that providing information need not be an alternative to performing an action but can be carried out in addition or in parallel.)

As already described above, such an output can be an acoustical and/or an optical output. In particular, the information can be output on a touch screen such that different alternatives are presented to the user who can choose one of these alternatives via the touch screen.

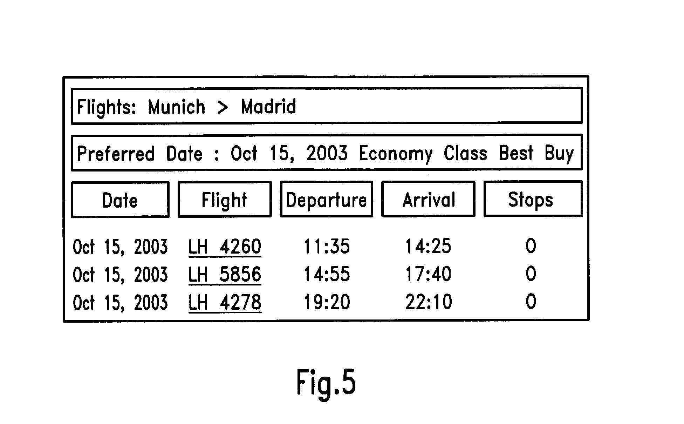

A corresponding optical output, particularly suitable for a touch screen is illustrated in Fig. 5. Before this output is displayed on the screen, all necessary information was already acquired in the preceding steps of the dialog, namely, the departure city, the destination city and the date.

Then, the user is provided with a plurality of possible alternatives, in the present case, a set of possible flight connections from Munich to Madrid. The user is enabled to select one of the flights. The selectability of the flight connections is indicated by the underlined flight numbers. Therefore, the user can select one of the flights by touching the screen at the appropriate position. If number keys such as the digits on a mobile phone are available, the user may also hit one of the keys 1, 2 or 3. According to a further alternative, the user can speak the connection by saying the flight number or the time (e.g., "Flight 4260" or "The connection departing at 14:55, please").

Returning to Fig. 4, if the output comprises selectable alternatives (step 412), the dialog returns to step 402 awaiting a further input, i.e., the selection of an alternative. If no selectable alternatives are present, the dialog can return to step 401.

If it turns out in step 403 that the mobile communication device can process the present input, the following step would be step 413 according to which the input is actually processed by the mobile communication device itself. In the subsequent step 414, it is again checked whether additional information is required or not.

In order to perform the steps of the methods described above, preferably, the mobile communication device and/or the server are provided with corresponding computer-executable instructions.

The above described examples are intended as illustrations only. Different combinations of the described features are possible as well. For example, the capabilities and responsibilities of the mobile communication device and the server can be distributed differently.

## Claims

1. Method for receiving information via a mobile communication device, comprising the steps of:
a) receiving a dialog script from a server by the mobile communication device for performing a dialog between the mobile communication device and a user,
b) running the dialog script on the mobile communication device to perform a dialog between the mobile communication device and a user.

2. Method according to claim 1, wherein step a) comprises storing the dialog script in a memory of the mobile communication device.

3. Method according to one of the preceding claims, wherein step b) comprises acoustically and/or optically prompting the user.

4. Method according to one of the preceding claims, wherein step b) further comprises initiating a dialog between a user and a server.

5. Method according to one of the preceding claims, wherein step b) comprises acoustically and/or optically presenting information to the user.

6. Method according to claim 5, wherein the presented information represent different alternatives a user can select from among.

7. Method according to claim 5 or 6, wherein optically presenting comprises presenting information on a touch screen, in particular, wherein a part of the presented information is selectable via the touch screen.

8. Method according to one of the preceding claims, further comprising providing a user input, particularly identifying a selected alternative, for a server.

9. Method according to one of the preceding claims, wherein step b) comprises acquiring an acoustic and/or haptic and/or graphical input.

10. Method according to claim 9, wherein acquiring an acoustic input comprises processing the acoustic input using speaker independent and/or speaker dependent speech recognition.

11. Method according to claim 10, wherein step a) comprises receiving a dialog specific speech recognition vocabulary set from a server.

12. Method according to one of the claims 9 - 11, wherein acquiring a graphical input comprises processing the input using character recognition.

13. Method according to one of the preceding claims, wherein step a) is preceded by requesting a dialog script from a server.

14. Method according to claim 13, wherein requesting a dialog script comprises requesting a dialog script for a predetermined language.

15. Method according to one of the preceding claims, wherein step b) comprises translating an output to the user into a predetermined language.

16. Method for providing information by a server, comprising providing a dialog script for a mobile communication device by a server for performing a dialog between the mobile communication device and a user.

17. Method according to claim 15, further comprising performing a dialog between a user and the server initiated by the mobile communication device.

18. Method according to claim 16 or 17, further comprising receiving electronic data from the mobile communication device identifying a selected alternative by the server.

19. Method according to claim 18, further comprising initiating an action by the server corresponding to the selected alternative.

20. Method according to one of the claims 16 - 19, wherein the dialog script is provided upon request of the mobile communication device.

21. Method according to one of the claims 16 - 20, wherein providing a dialog script comprises selecting a dialog script for a preferred language of the mobile communication device.

22. Method according to claim 21, wherein providing a dialog script comprises determining by the server a preferred language of the mobile communication device.

23. Method according to one of the claims 15 - 20, further comprising translating information and/or a part of the dialog script into another language by the server.

24. Method for communicating information from a server via a mobile communication device, comprising the steps of:
establishing a data connection between the mobile communication device and the server,
providing information according to the method of one of the claims 16 - 22, and
receiving information according to the method of one of the claims 1 - 15.

25. Method according to claim 24, wherein the step of providing information is performed automatically upon establishment of the data connection.

26. Computer program product comprising one or more computer readable media having computer-executable instructions for performing the steps of the method according to one of the claims 1 - 25.
